# EUROPEAN PATENT SPECIFICATION

(11) **EP 3 720 015 B1**
(45) Date of publication and mention of the grant of the patent: **27.08.2025**
(21) Application number: 19736259.3
(22) Date of filing: 08.01.2019
(51) Int. Cl.: H04B 10/032, H04B 10/038, H04B 10/079

(54) **METHOD AND DEVICE FOR PROTECTING SERVICE OF OPTICAL NETWORK UNIT, STORAGE MEDIUM**
VERFAHREN UND VORRICHTUNG ZUM SCHUTZ EINER OPTISCHEN NETZWERKEINHEIT UND SPEICHERMEDIUM
PROCÉDÉ ET DISPOSITIF DE PROTECTION DE SERVICE D'UNITÉ DE RÉSEAU OPTIQUE, ET SUPPORT DE STOCKAGE

(30) Priority: 08.01.2018 CN 201810015509
(43) Date of publication of application: 07.10.2020
(73) Proprietor: ZTE Corporation, Shenzhen, Guangdong 518057 (CN)
(72) Inventor: ZHANG, Qingguo, Shenzhen, Guangdong 518057 (CN)
(74) Representative: Baudler, Ron
(86) International application number: PCT/CN2019/070794
(87) International publication number: WO 2019/134708

(56) References cited:
- EP-A1- 2 101 449
- EP-A1- 2 393 237
- CN-A- 102 598 587
- CN-A- 102 970 197
- CN-B- 102 970 197
- CN-U- 201 571 076
- CN-U- 205 051 830
- CN-U- 206 042 255

## Description

### TECHNICAL FIELD

The present disclosure relates to the field of communication, and in particular, to a method and a device for protecting service of an Optical Network Unit (ONU) in a Passive Optical Network (PON).

### BACKGROUND

PON technology is an important technology for an optical fiber access network, and is a mainstream technology for implementing fiber to the x (FTTx). A typical PON system generally includes a central office end device (such as an Optical Line Terminal (OLT)), a customer end device (such as an ONU), and an Optical Distribution Network (ODN).

PONs are mainly classified into Gigabit Passive Optical networks (GPONs), Ethernet Passive Optical Networks (EPONs), 10 Gigabit Passive Optical networks (10G-PONs), and the like in terms of standard. In order to improve robustness and reliability of service provided by the PON, an optical link protection technology may be introduced. The existing optical link protection technology for the PON mainly includes Type A, Type B, Type C, Type D, hand-in-hand protection and the like. These techniques are mainly directed towards an optical link protection between an ONU PON port and an OLT PON port. When a problem occurs in an optical link between the ONU PON port and the OLT PON port, a service cannot be normally acquired.

CN102970197 discloses a method and apparatus for protecting hybrid-networking service.

CN201571076U discloses a backup system for Ethernet.

EP2393237 discloses a passive optical network protection method, master-standby switch control device and system.

### SUMMARY

An embodiment of the present disclosure provides a method for protecting service of an optical network unit (ONU), the method includes:
providing an uplink Passive Optical Network link, called an uplink PON link, and a redundant uplink Ethernet link for the ONU; detecting a quality of a signal transmitted by the uplink PON link of the ONU; detecting a link status of the redundant uplink Ethernet link in response to that the quality of the signal transmitted by the uplink PON link is determined to be lower than a preset quality threshold or in response to that the uplink PON link is detected to be interrupted;switching a service bearing channel of the uplink PON link to the redundant uplink Ethernet link in response to that the link status of the redundant uplink Ethernet link is determined to be connected; and wherein the redundant uplink Ethernet link is connected from the ONU to a service server, the uplink PON link is connected from the ONU to an Optical Line Terminal, called OLT, and the service server and the OLT are separated from each other.

An embodiment of the present disclosure further provides a method for protecting service of an optical network unit (ONU), the method includes: providing an uplink Ethernet link and a redundant uplink Passive Optical Network link, called a redundant uplink PON link, for the ONU; detecting a quality of a signal transmitted by the uplink Ethernet link of the ONU; detecting a link status of the redundant uplink PON link in response to that the quality of the signal transmitted by the uplink Ethernet link is determined to be lower than a preset quality threshold or in response to that the uplink Ethernet link is detected to be interrupted; switching a service bearing channel of the uplink Ethernet link to the redundant uplink PON link in response to that the link status of the redundant uplink PON link is determined to be connected; and wherein the uplink Ethernet link is connected from the ONU to a service server, the redundant uplink PON link is connected from the ONU to an Optical Line Terminal, called OLT, and the service server and the OLT are separated from each other.

An embodiment of the present disclosure further provides a device for protecting service of an optical network unit (ONU), the device includes: a configuration unit configured to provide the ONU with an uplink Passive Optical Network link, called an uplink PON link, and a redundant uplink Ethernet link; a first detection unit configured to detect a quality of a signal transmitted by the uplink PON link of the ONU; a first determination unit configured to trigger a second detection unit in response to the quality of the signal transmitted by the uplink PON link is determined to be lower than a preset quality threshold, or trigger the second detection unit in response to that the uplink PON link is detected to be interrupted; the second detection unit configured to detect a link status of the redundant uplink Ethernet link; a second determination unit configured to determine whether the link status of the redundant uplink Ethernet link is connected, and trigger a first switching unit in response to that the link status of the redundant uplink Ethernet link is determined to be connected; and the first switching unit configured to switch a service bearing channel of the uplink PON link to the redundant uplink Ethernet link; and wherein the redundant uplink Ethernet link is connected from the ONU to a service server, the uplink PON link is connected from the ONU to an Optical Line Terminal, called OLT, and the service server and the OLT are separated from each other.

An embodiment of the present disclosure further provides a device for protecting service of an optical network unit (ONU), the device includes: a configuration unit configured to provide the ONU with an uplink Ethernet link and a redundant uplink Passive Optical Network link, called a redundant uplink PON link; a first detection unit configured to detect a quality of a signal transmitted by the uplink Ethernet link of the ONU; a first determination unit configured to trigger a second detection unit in response to that the quality of the signal transmitted by the uplink Ethernet link is determined to be lower than a preset quality threshold, or trigger the second detection unit in response to that the uplink Ethernet link is detected to be interrupted; the second detection unit configured to detect a link status of the redundant uplink PON link; a second determination unit configured to determine whether the link status of the redundant uplink PON link is connected, and trigger a first switching unit in response to that the link status of the redundant uplink PON link is determined to be connected; and the first switching unit configured to switch a service bearing channel of the uplink Ethernet link to the redundant uplink PON link; and wherein the uplink Ethernet link is connected from the ONU to a service server, the redundant uplink PON link is connected from the ONU to an Optical Line Terminal, called OLT, and the service server and the OLT are separated from each other.

An embodiment of the present disclosure further provides a computer-readable storage medium storing a computer program, the computer program, when executed by a processor, cause the processor to implement the method for protecting service of the optical network unit in the embodiments of the present disclosure.

### DESCRIPTION OF DRAWINGS

Fig. 1 is a topological diagram of a connection relationship of an existing optical network unit;
Fig. 2 is a topological diagram of a connection relationship of an optical network unit according to an embodiment of the present disclosure;
Fig. 3 is a topological diagram of a connection relationship of an optical network unit according to an embodiment of the present disclosure;
Fig. 4 is a topological diagram of a connection relationship of an optical network unit according to an embodiment of the present disclosure;
Fig. 5 is a schematic flowchart of a method for protecting service of an optical network unit according to an embodiment of the present disclosure;
Fig. 6 is a schematic flowchart of a method for protecting service of an optical network unit according to an embodiment of the present disclosure;
Fig. 7 is a schematic flowchart of a method for protecting service of an optical network unit according to an embodiment of the present disclosure;
Fig. 8 is a schematic flowchart of a method for protecting service of an optical network unit according to an embodiment of the present disclosure;
Fig. 9 is a schematic structural diagram of a device for protecting service of an optical network unit according to an embodiment of the present disclosure;
Fig. 10 is a schematic structural diagram of a device for protecting service of an optical network unit according to an embodiment of the present disclosure;
Fig. 11 is a schematic structural diagram of a device for protecting service of an optical network unit according to an embodiment of the present disclosure; and
Fig. 12 is a schematic structural diagram of a device for protecting service of an optical network unit according to an embodiment of the present disclosure.

### DESCRIPTION OF EMBODIMENTS

In order to explain features of the present disclosure in more detail, embodiments of the present disclosure are explained in detail below with reference to the accompanying drawings, which are for reference and not intended to limit the present disclosure.

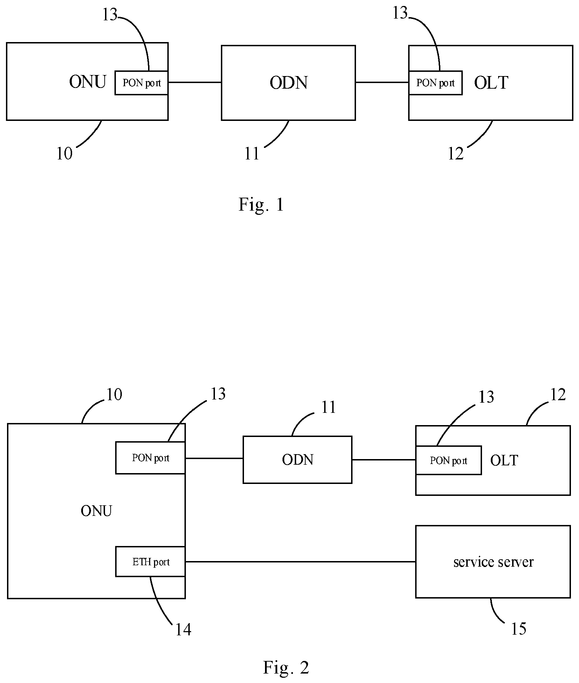

Fig. 1 shows a topological diagram of a connection relationship of an existing optical network unit. As shown in Fig. 1, a conventional Optical Network Unit (ONU) 10 is provided with only a PON port 13, the ONU 10 is connected to an Optical Distribution Network (ODN) 11 through the PON port 13, the ODN 11 is connected to a PON port 13 of an Optical Line Terminal (OLT) 12, and the ONU 10 acquires service only through an uplink PON link (a link from the PON port 13 of the ONU 10 to the PON port 13 of the OLT 12).

Fig. 2 shows a topological diagram of a connection relationship of an optical network unit according to an embodiment of the present disclosure. As shown in Fig. 2, the ONU 10 of the present embodiment is provided with a PON port 13 and an Ethernet (ETH) port 14. The ONU 10 is connected to an Optical Distribution Network (ODN) 11 through the PON port 13, the ODN 11 is connected to a PON port 13 of the OLT 12, and the ODN 11 provides an optical channel between the OLT 12 and the ONU 10. In addition, the ONU 10 is further connected to a service server 15 through the ETH port 14.

The ONU 10 may be configured to acquire service from the OLT 12 via the PON port 13, i.e., an uplink PON link between the PON port 13 of the ONU 10 and the PON port 13 of the OLT 12 may be used as a service bearing channel. An uplink Ethernet link is between the ETH port 14 of the ONU 10 and the service server 15, and may be used as a redundant link for the uplink PON link. The ONU 10 may be set to temporarily not acquire service from the service server 15 through the ETH port 14.

The ONU 10 may further be configured to acquire service from the service server 15 via the ETH port 14, i.e., the uplink Ethernet link between the ETH port 14 of the ONU 10 and the service server 15 may be used as a service bearing channel. The uplink PON link between the PON port 13 of the ONU 10 and the PON port 13 of the OLT 12 may be used as a redundant link for the uplink Ethernet link. The ONU 10 may be configured to temporarily not acquire service from the OLT 12 through the PON port 13.

The following describes a specific process of the method for protecting service of the optical network unit according to the embodiment of the present disclosure with reference to a topology of connection relationship of the optical network unit.

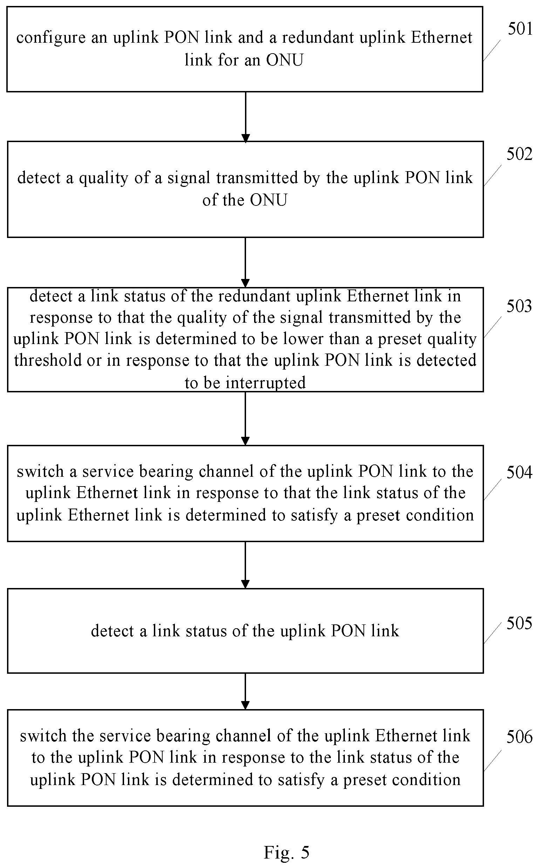

Fig. 5 is a schematic flowchart of a method for protecting service of an optical network unit according to an embodiment of the present disclosure. As shown in Fig. 5, the method for protecting service of the optical network unit includes the following steps 501 to 506.

At step 501, an uplink Passive Optical Network (PON) link and a redundant uplink Ethernet link are configured for an Optical Network Unit (ONU).

As shown in Fig. 2, the uplink Ethernet link between the ETH port 14 of the ONU 10 and the service server 15 is used as a redundant link for the uplink PON link between the PON port 13 of the ONU 10 and the PON port 13 of the OLT 12, and the ONU 10 is configured to temporarily not acquire service from the service server 15 through the ETH port 14.

At step 502, a quality of a signal transmitted by the uplink PON link of the ONU is detected.

That is, after the connection relationship of the ONU 10 shown in Fig. 2 is configured, a detection for the quality of the signal transmitted by the uplink PON link is started.

At step 503, in response to that the quality of the signal transmitted by the uplink PON link is determined to be lower than a preset quality threshold or in response to that the uplink PON link is detected to be interrupted, a link status of the redundant uplink Ethernet link is detected.

In the embodiment, the quality of the signal transmitted by the uplink PON link being lower than the preset quality threshold may specifically include that a bit error rate of the uplink PON link is higher than a set value or a loss-of-frame (LOF) alarm is detected. The bit error rate being higher than the set value may be indicated by an alarm generated due to a bit error rate higher than 10⁻³.

In the embodiment, the step of detecting an interruption of the uplink PON link may specifically include detecting a loss-of-signal (LOS) alarm.

At step 504, a service bearing channel of the uplink PON link is switched to the uplink Ethernet link in response to that the link status of the uplink Ethernet link is determined to satisfy a preset condition.

When detecting that the uplink Ethernet link is connected, i.e., the ONU 10 is able to connect to the service server 15 via the uplink Ethernet link, the service bearing channel of the uplink PON link is switched to the uplink Ethernet link, and at this time, the ONU 10 no longer acquires service via the PON port 13, but instead acquires service via the ETH port 14.

At step 505, a link status of the uplink PON link is detected.

For example, after a preset time duration τₒ elapsing from a time at which the service bearing channel of the uplink PON link is switched to the uplink Ethernet link, the link status of the uplink PON link may be detected.

At step 506, the service bearing channel of the uplink Ethernet link is switched to the uplink PON link in response to the link status of the uplink PON link is determined to satisfy a preset condition.

When detecting that the uplink PON link is connected and the alarm indicating the bit error rate higher than 10⁻³ disappears, the service bearing channel of the uplink Ethernet link is switched to the uplink PON link, and the ONU 10 stops acquiring the service through the ETH port 14 and resumes acquiring the service through the PON port 13.

In the embodiment, the uplink Ethernet link is newly added to the ONU 10, and when it is detected that the uplink PON link of the ONU 10 has a problem and a service cannot be normally acquired from the uplink PON link, for example, when the quality of the signal transmitted by the uplink PON link is poor or when the uplink PON link is interrupted, if the redundant uplink Ethernet link satisfies a preset condition (e.g., transmission condition), the service bearing channel is switched to the uplink Ethernet link, and then when the uplink PON link reaches the preset condition again, the service bearing channel is switched back to the uplink PON link. Thus, the problem that the service cannot be normally acquired when the uplink PON link of the ONU 10 has a problem is solved.

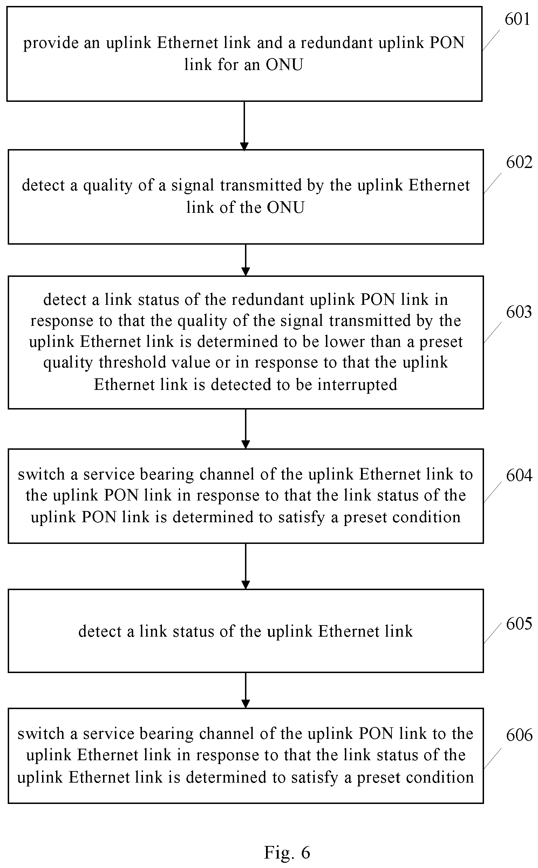

Fig. 6 is a schematic flowchart of a method for protecting service of an optical network unit according to an embodiment of the present disclosure. As shown in Fig. 6, the method for protecting service of the optical network unit includes the following steps 601 to 606.

At step 601, an uplink Ethernet link and a redundant uplink Passive Optical Network (PON) link are provided for an Optical Network Unit (ONU).

As shown in Fig. 2, the uplink PON link between the PON port 13 of the ONU 10 and the PON port 13 of the OLT 12 is used as a redundant link for the uplink Ethernet link between the ETH port 14 of the ONU 10 and the service server 15, and the ONU 10 is configured to temporarily not acquire service from the OLT 12 through the PON port 13.

At step 602, a quality of a signal transmitted by the uplink Ethernet link of the ONU is detected.

That is, after a connection relationship of the ONU 10 shown in Fig. 2 is configured, a detection for the quality of the signal transmitted by the uplink Ethernet link is started.

At step 603, in response to that the quality of the signal transmitted by the uplink Ethernet link is determined to be lower than a preset quality threshold value or in response to that the uplink Ethernet link is detected to be interrupted, a link status of the redundant uplink PON link is detected.

In the embodiment, the quality of the signal transmitted by the uplink Ethernet link being lower than the preset quality threshold may specifically include that a bit error rate of the uplink Ethernet link is higher than a set value or a loss-of-frame (LOF) alarm is detected. The bit error rate being higher than the set value may be indicated by an alarm generated due to a bit error rate higher than 10⁻³.

In the embodiment, the step of detecting an interruption of the uplink Ethernet link may specifically include detecting a loss-of-signal (LOS) alarm.

At step 604, a service bearing channel of the uplink Ethernet link is switched to the uplink PON link in response to that the link status of the uplink PON link is determined to satisfy a preset condition.

When detecting that the uplink PON link is connected, i.e., the ONU 10 is able to connect to the PON port 13 of the OLT 12 via the uplink PON link, the service bearing channel of the uplink Ethernet link is switched to the uplink PON link, and at this time, the ONU 10 no longer acquires service via the ETH port 14, but instead acquires service via the PON port 13.

At step 605, a link status of the uplink Ethernet link is detected.

For example, after a preset time duration τₒ elapsing from a time at which the service bearing channel of the uplink Ethernet link is switched to the uplink PON link, the link status of the uplink PON link may be detected.

At step 606, a service bearing channel of the uplink PON link is switched to the uplink Ethernet link in response to that the link status of the uplink Ethernet link is determined to satisfy a preset condition.

When detecting that the uplink Ethernet link is connected and the alarm indicating the bit error rate higher than 10⁻³ disappears, the service bearing channel of the uplink PON link is switched to the uplink Ethernet link, and the ONU 10 stops acquiring the service through the PON port 13 and resumes acquiring the service through the ETH port 14.

In the embodiment, the uplink Ethernet link is newly added to the ONU 10, and when it is detected that the uplink Ethernet link of the ONU 10 has a problem and a service cannot be normally acquired from the uplink Ethernet link, for example, when the quality of the signal transmitted by the uplink Ethernet link is poor or the uplink Ethernet link is interrupted, if the redundant uplink PON link satisfies a preset condition (transmission condition), the service bearing channel is switched to the uplink PON link, and then when the uplink Ethernet link reaches the preset condition again, the service bearing channel is switched back to the uplink Ethernet link. Therefore, the problem that the service cannot be normally acquired when the uplink Ethernet link of the ONU 10 has a problem is solved.

The method for protecting service of the ONU according to the embodiment of the present disclosure is further described below with reference to a case that the ONU 10 accesses different PON/Ethernet networks in practical application.

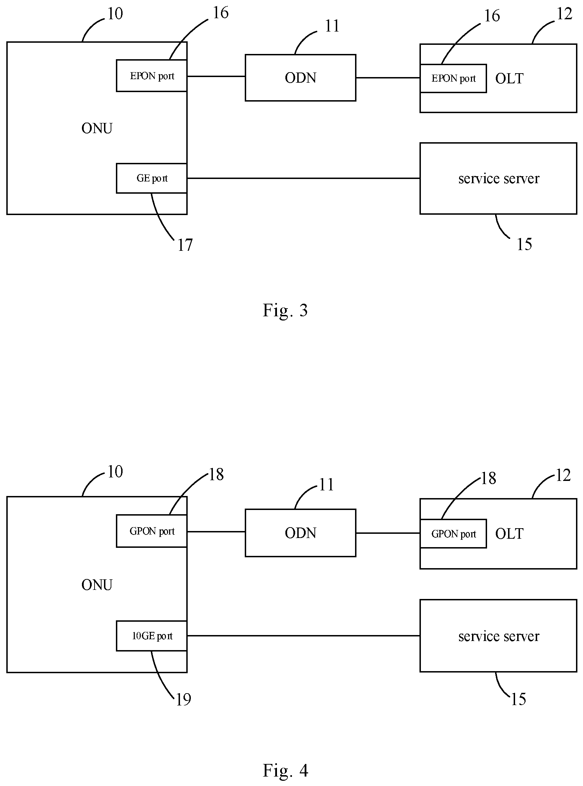

Fig. 3 is a topological diagram of a connection relationship of an optical network unit according to an embodiment of the present disclosure. As shown in Fig. 3, the ONU 10 of the present embodiment is provided with an Ethernet Passive Optical Network (EPON) port 16 and a Gigabit Ethernet (GE) port 17. The ONU 10 is connected to an Optical Distribution Network (ODN) 11 via the EPON port 16, the ODN 11 is connected to an EPON port 16 of an Optical Line Terminal (OLT) 12, and the ODN 11 provides an optical channel between the OLT 12 and the ONU 10. In addition, the ONU 10 is further connected to a service server 15 through the GE port 17.

The ONU 10 may be configured to acquire service from the OLT 12 via the EPON port 16, i.e., an uplink EPON link between the EPON port 16 of the ONU 10 and the EPON port 16 of the OLT 12 may serve as a service bearing channel. An uplink GE link between the GE port 17 of the ONU 10 and the service server 15 may be used as a redundant link for the uplink EPON link. The ONU 10 may be set to temporarily not acquire service from the service server 15 through the GE port 17.

The method for protecting service of the optical network unit provided by the embodiment of the present disclosure is described in detail below with reference to a topology of connection relationship of the optical network unit.

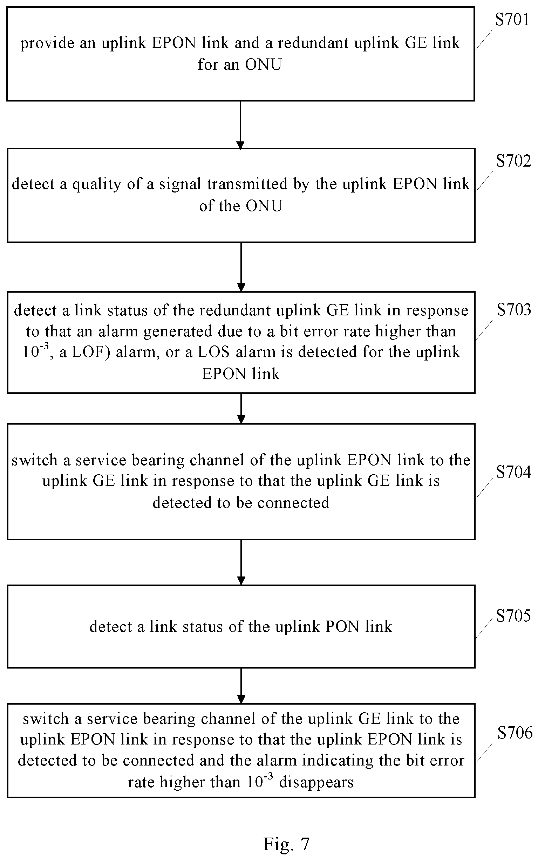

Fig. 7 is a schematic flowchart of a method for protecting service of an optical network unit according to an embodiment of the present disclosure. As shown in Fig. 7, the method for protecting service of the optical network unit in the embodiment includes the following steps S701 to S706.

At step S701, an uplink EPON link and a redundant uplink GE link are provided for an Optical Network Unit (ONU).

As shown in Fig. 3, the uplink GE link between the GE port 17 of the ONU 10 and the service server 15 is used as a redundant link for the uplink EPON link between the EPON port 16 of the ONU 10 and the EPON port 16 of the OLT 12, and the ONU 10 is configured to temporarily not acquire service from the service server 15 via the GE port 17.

At step S702, a quality of a signal transmitted by the uplink EPON link (i.e., from the ONU 10 to the OLT 12) of the ONU 10 is detected.

That is, after the connection relationship of the ONU 10 shown in Fig. 3 is configured, a detection of the quality of the signal transmitted by the uplink EPON link is started.

At step S703, a link status of the redundant uplink GE link (i.e., from the GE port 17 to the service server 15) is detected in response to that an alarm generated due to a bit error rate higher than 10⁻³, a loss-of-frame (LOF) alarm, or a loss-of-signal (LOS) alarm is detected for the uplink EPON link.

At step S704, in response to that the uplink GE link is detected to be connected, i.e., the ONU 10 is able to connect to the service server 15 via the uplink GE link, a service bearing channel of the uplink EPON link is switched to the uplink GE link, and the ONU 10 no longer acquires service via the EPON port 16, but instead acquires service via the GE port 17.

At step S705, after a preset time duration τₒ elapsing from a time at which the service bearing channel of the uplink PON link is switched to the uplink Ethernet link, a link status of the uplink PON link is detected.

At step S706, in response to that the uplink EPON link is detected to be connected and the alarm indicating the bit error rate higher than 10⁻³ disappears, a service bearing channel of the uplink GE link is switched to the uplink EPON link, the ONU 10 stops acquiring the service through the GE port 17 and resumes acquiring the service through the EPON port 16.

In the embodiment, the uplink GE link is newly added to the ONU 10, and when it is detected that the uplink EPON link of the ONU 10 has a problem and a service cannot be normally acquired from the uplink EPON link, for example, when the quality of the signal transmitted by the uplink EPON link is poor or the uplink EPON link is interrupted, if the redundant uplink GE link satisfies a preset condition (transmission condition), the service bearing channel is switched to the uplink GE link, and then when the uplink EPON link reaches the preset condition again, the service bearing channel is switched back to the uplink EPON link. Thus, the problem that the service cannot be normally acquired when the uplink EPON link of the ONU 10 has a problem is solved.

Fig. 4 is a topological diagram of a connection relationship of an optical network unit according to an embodiment of the present disclosure. As shown in Fig. 4, the ONU 10 of the present embodiment is provided with a Gigabit Passive Optical Network (GPON) port 18 and a 10G Ethernet (10 GE) port 19. The ONU 10 is connected to an Optical Distribution Network (ODN) 11 via the GPON port 18, the ODN 11 is connected to a GPON port 18 of an Optical Line Terminal (OLT) 12, and the ODN 11 provides an optical channel between the OLT 12 and the ONU 10. In addition, the ONU 10 is further connected to a service server 15 through the 10GE port 19.

The ONU10 may be configured to acquire service from the service server 15 via the 10GE port 19, i.e., an uplink 10GE link between the 10GE port 19 of the ONU10 to the service server 15 may be used as a service bearing channel. An uplink GPON link between the GPON port 18 of the ONU10 and the GPON port 18 of the OLT 12 may serve as a redundant link for the uplink 10GE link. The ONU10 may be set to temporarily not acquire service from the OLT 12 through the GPON port 18.

The method for protecting service of the optical network unit provided by the embodiment of the present disclosure is described in detail below with reference to a topology of connection relationship of the optical network unit.

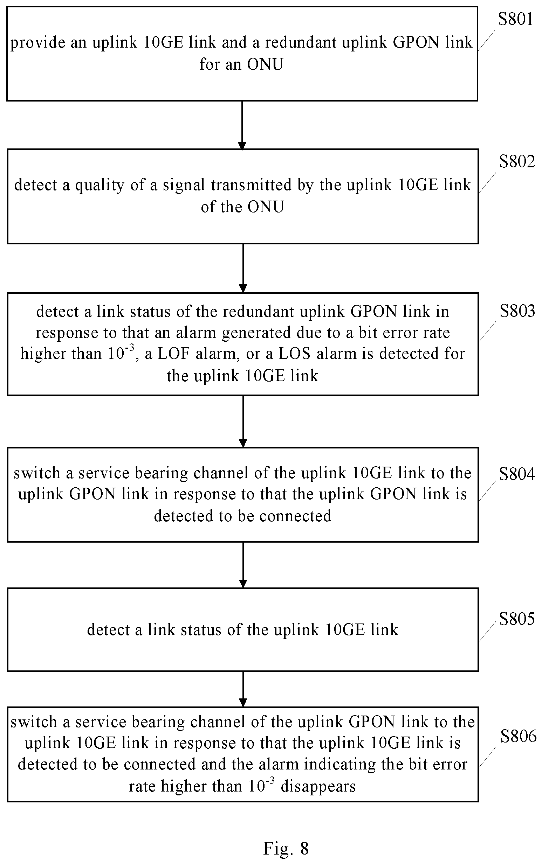

Fig. 8 shows a schematic flowchart of a method for protecting service of an optical network unit according to an embodiment of the present disclosure. As shown in Fig. 8, the method for protecting service of the optical network unit in the embodiment includes the following steps S801 to S806.

At step S801, an uplink 10GE link and a redundant uplink GPON link are provided for an Optical Network Unit (ONU).

As shown in Fig. 4, the uplink GPON link between the GPON port 18 of the ONU 10 and the GPON port 18 of the OLT 12 is used as a redundant link for the uplink 10GE link between the 10GE port 19 of the ONU 10 to the service server 15, and the ONU 10 is set to temporarily not acquire service from the OLT 12 through the GPON port 18.

At step S802, a quality of a signal transmitted by the uplink 10GE link (i.e., from the 10GE port 19 to the service server 15) of the ONU 10 is detected.

That is, after the connection relationship of the ONU 10 shown in Fig. 4 is configured, a detection for the quality of the signal transmitted by the uplink 10GE link is started.

At step S803, a link status of the redundant uplink GPON link (i.e., from the GPON port 18 of the ONU 10 to the GPON port 18 of the OLT 12) is detected in response to that an alarm generated due to a bit error rate higher than 10⁻³, a loss-of-frame (LOF) alarm, or a loss-of-signal (LOS) alarm is detected for the uplink 10GE link.

At step S804, in response to that the uplink GPON link is detected to be connected, i.e., the ONU 10 is able to connect to the OLT 12 via the uplink GPON link, a service bearing channel of the uplink 10GE link is switched to the uplink GPON link, and the ONU 10 no longer acquires service via the 10GE port 19, but instead acquires traffic via the GPON port 18.

At step S805, after a preset time duration τₒ elapsing from a time at which the service bearing channel of the uplink 10GE link is switched to the uplink GPON link, a link status of the uplink 10GE link is detected.

At step S806, in response to that the uplink 10GE link is detected to be connected and the alarm indicating the bit error rate higher than 10⁻³ disappears, a service bearing channel of the uplink GPON link is switched to the uplink 10GE link, the ONU 10 stops acquiring the service through the GPON port 18, and resumes acquiring the service through the 10GE port 19.

In the embodiment, the uplink 10GE link is newly added to the ONU, and when it is detected that the uplink 10GE link of the ONU 10 has a problem and a service cannot be normally obtained from the uplink 10GE link, for example, when the quality of the signal transmitted by the uplink 10GE link is poor or the uplink 10GE link is interrupted, if the redundant uplink GPON link satisfies a preset condition (transmission condition), the service bearing channel is switched to the uplink GPON link, and then when the uplink 10GE link reaches the preset condition again, the service bearing channel is switched back to the uplink 10GE link. Thus, the problem that the service cannot be normally acquired when the uplink 10GE link of the ONU 10 has a problem is solved.

Although embodiments of the present disclosure are described with examples where the PON is GPON or EPON, and the Ethernet is GE or 10GE, it should be understood that the present disclosure is not limited thereto. For example, the PON may be a 10G-PON, and the Ethernet may be a Fast Ethernet (FE).

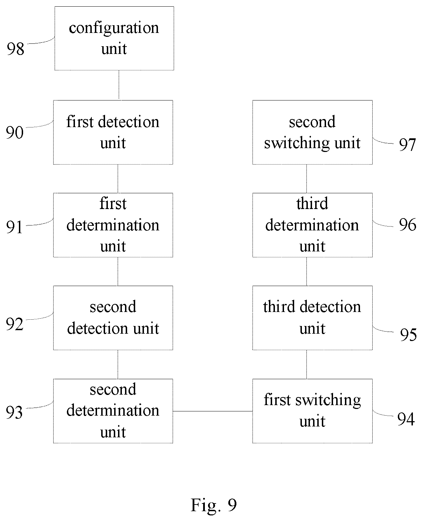

Fig. 9 is a schematic structural diagram of a device for protecting service of an optical network unit according to an embodiment of the present disclosure. As shown in Fig. 9, the device for protecting service of the optical network unit in the embodiment includes: a configuration unit 98 configured to provide an Optical Network Unit (ONU) with an uplink Passive Optical Network (PON) link and a redundant uplink Ethernet link; a first detection unit 90 configured to detect a quality of a signal transmitted by the uplink PON link of the ONU; a first determination unit 91 configured to trigger a second detection unit 92 in response to that the quality of the signal transmitted by the uplink PON link is determined to be lower than a preset quality threshold; the second detection unit 92 configured to detect a link status of the redundant uplink Ethernet link; a second determination unit 93 configured to determine whether the link status of the uplink Ethernet link satisfies a preset condition, and trigger a first switching unit 94 in response to that the link status of the uplink Ethernet link is determined to satisfy the preset condition; and the first switching unit 94 configured to switch a service bearing channel of the uplink PON link to the uplink Ethernet link.

In the embodiment, the device for protecting service of the optical network unit may further include a third detection unit 95, a third determination unit 96, and a second switching unit 97. The third detection unit 95 is configured to detect a link status of the uplink PON link after switching the service bearing channel of the uplink PON link to the uplink Ethernet link. The third determination unit 96 is configured to determine whether the link status of the uplink PON link satisfies a preset condition, and trigger the second switching unit 97 in response to that the link status of the uplink PON link is determined to satisfy the preset condition. The second switching unit 97 is configured to switch a service bearing channel of the uplink Ethernet link to the uplink PON link.

In the embodiment, the quality of the signal transmitted by the uplink PON link being lower than the preset quality threshold includes: a bit error rate of the uplink PON link is higher than a set value or a loss-of-frame (LOF) alarm is detected.

In the embodiment, the uplink Ethernet link is newly added to the ONU, and when it is detected that the quality of the signal transmitted by the uplink PON link of the ONU is lower than the preset quality threshold, if the redundant uplink Ethernet link satisfies the preset condition (transmission condition), the service bearing channel is switched to the uplink Ethernet link, and then when the uplink PON link reaches the preset condition again, the service bearing channel is switched back to the uplink PON link. Thus, normal acquisition of service of the ONU is protected.

It should be understood by those skilled in the art that functions implemented by each unit in the device for protecting service of the optical network unit shown in Fig. 9 can be understood by referring to the related description of the foregoing method for protecting service of the optical network unit. The functions of each unit in the device for protecting service of the optical network unit shown in Fig. 9 may be implemented by a program running on a processor, or may be implemented by a specific logic circuit.

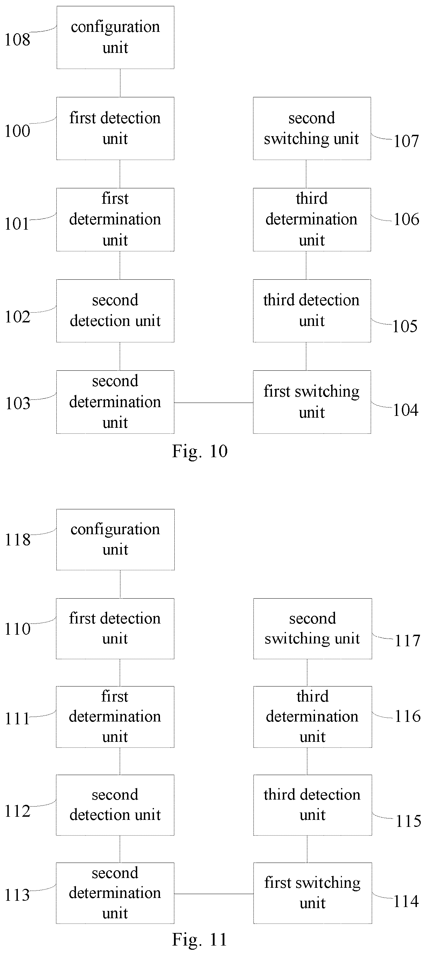

An embodiment of the present disclosure further provides a device for protecting an optical network unit, as shown in Fig. 10, the device for protecting service of the optical network unit in the embodiment includes: a configuration unit 108 configured to provide an Optical Network Unit (ONU) with an uplink Passive Optical Network (PON) link and a redundant uplink Ethernet link; a first detection unit 100 configured to detect a quality of a signal transmitted by the uplink PON link of the ONU; a first determination unit 101 configured to determine whether the uplink PON link is interrupted, and trigger a second detection unit 102 in response to that the uplink PON link is detected to be interrupted; the second detection unit 102 configured to detect a link status of the redundant uplink Ethernet link; a second determination unit 103 configured to determine whether the link status of the uplink Ethernet link satisfies a preset condition, and trigger a first switching unit 104 in response to that the link status of the uplink Ethernet link is determined to satisfy the preset condition; and the first switching unit 104 configured to switch a service bearing channel of the uplink PON link to the uplink Ethernet link.

In the embodiment, the device for protecting service of the optical network unit may further include a third detection unit 105, a third determination unit 106, and a second switching unit 107. The third detection unit 105 is configured to detect a link status of the uplink PON link after switching the service bearing channel of the uplink PON link to the uplink Ethernet link. The third determination unit 106 is configured to determine whether the link status of the uplink PON link satisfies a preset condition, and trigger the second switching unit 107 in response to that the link status of the uplink PON link is determined to satisfy the preset condition. The second switching unit 107 is configured to switch a service bearing channel of the uplink Ethernet link to the uplink PON link.

In the embodiment, determining that the uplink PON link is interrupted includes: a loss-of-signal (LOS) alarm is detected.

In the embodiment, the uplink Ethernet link is newly added to the ONU, and when it is detected that the uplink PON link of the ONU is interrupted and a service cannot be normally acquired from the uplink PON link, if the redundant uplink Ethernet link satisfies a preset condition (transmission condition), the service bearing channel is switched to the uplink Ethernet link, and then when the uplink PON link reaches the preset condition again, the service bearing channel is switched back to the uplink PON link. Thus, normal acquisition of service of the ONU is protected.

It should be understood by those skilled in the art that functions implemented by each unit in the device for protecting service of the optical network unit shown in Fig. 10 can be understood by referring to the related description of the foregoing method for protecting service of the optical network unit. The functions of each unit in the device for protecting service of the optical network unit shown in Fig. 10 may be implemented by a program running on a processor, or may be implemented by a specific logic circuit.

An embodiment of the present disclosure further provides a device for protecting service of an optical network unit, as shown in Fig. 11, the device for protecting service of the optical network unit in the embodiment includes: a configuration unit 118 configured to provide an Optical Network Unit (ONU) with an uplink Ethernet link and a redundant uplink Passive Optical Network (PON) link; a first detection unit 110 configured to detect a quality of a signal transmitted by the uplink Ethernet link of the ONU; a first determination unit 111 configured to trigger a second detection unit 112 in response to that the quality of the signal transmitted by the uplink Ethernet link is determined to be lower than a preset quality threshold; the second detection unit 112 configured to detect a link status of the redundant uplink PON link; a second determination unit 113 configured to determine whether the link status of the uplink PON link satisfies a preset condition, and trigger a first switching unit 114 in response to that the link status of the uplink PON link is determined to satisfy the preset condition; and the first switching unit 114 configured to switch a service bearing channel of the uplink Ethernet link to the uplink PON link.

In the embodiment, the device for protecting service of the optical network unit may further include a third detection unit 115, a third determination unit 116, and a second switching unit 117. The third detection unit 115 is configured to detect a link status of the uplink Ethernet link after switching the service bearing channel of the uplink Ethernet link to the uplink PON link. The third determination unit 116 is configured to determine whether the link status of the uplink Ethernet link satisfies a preset condition, and trigger the second switching unit 117 in response to that the link status of the uplink Ethernet link is determined to satisfy the preset condition. The second switching unit 117 is configured to switch a service bearing channel of the uplink PON link to the uplink Ethernet link.

In the embodiment, the quality of the signal transmitted by the uplink Ethernet link being lower than the preset quality threshold includes: a bit error rate of the uplink Ethernet link is higher than a set value or a loss-of-frame (LOF) alarm is detected.

In the embodiment, the uplink Ethernet link is newly added to the ONU, and when it is detected that the quality of the signal transmitted by the uplink Ethernet link of the ONU is lower than the preset quality threshold, if the redundant uplink PON link satisfies the preset condition (transmission condition), the service bearing channel is switched to the uplink PON link, and then when the uplink Ethernet link reaches the preset condition again, the service bearing channel is switched back to the uplink Ethernet link. Thus, normal acquisition of service of the ONU is protected.

It should be understood by those skilled in the art that functions implemented by each unit in the device for protecting service of the optical network unit shown in Fig. 11 can be understood by referring to the related description of the foregoing method for protecting service of the optical network unit. The functions of each unit in the device for protecting service of the optical network unit shown in Fig. 11 may be implemented by a program running on a processor, or may be implemented by a specific logic circuit.

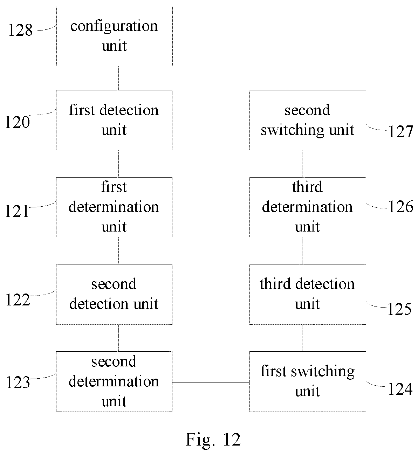

An embodiment of the present disclosure further provides a device for protecting service of an optical network unit, as shown in Fig. 12, the device for protecting service of the optical network unit in the embodiment includes: a configuration unit 128 configured to provide an Optical Network Unit (ONU) with an uplink Ethernet link and a redundant uplink Passive Optical Network (PON) link; a first detection unit 120 configured to detect a quality of a signal transmitted by the uplink Ethernet link of the ONU; a first determination unit 121 configured to determine whether the uplink Ethernet link is interrupted, and trigger a second detection unit 122 in response to that the uplink Ethernet link is detected to be interrupted; the second detection unit 122 configured to detect a link status of the redundant uplink PON link; a second determination unit 123 configured to determine whether the link status of the uplink PON link satisfies a preset condition, and trigger a first switching unit 124 in response to that the link status of the uplink PON link is determined to satisfy the preset condition; and the first switching unit 124 configured to switch a service bearing channel of the uplink Ethernet link to the uplink PON link.

In the embodiment, the device for protecting service of the optical network unit may further include a third detection unit 125, a third determination unit 126, and a second switching unit 127. The third detection unit 125 is configured to detect a link status of the uplink Ethernet link after switching the service bearing channel of the uplink Ethernet link to the uplink PON link. The third determination unit 126 is configured to determine whether the link status of the uplink Ethernet link satisfies a preset condition, and trigger the second switching unit 127 in response to that the link status of the uplink Ethernet link is determined to satisfy the preset condition. The second switching unit 127 is configured to switch a service bearing channel of the uplink PON link to the uplink Ethernet link.

In the embodiment, determining that the uplink Ethernet link is interrupted includes: a loss-of-signal (LOS) alarm is detected.

In the embodiment, the uplink Ethernet link is newly added to the ONU, and when it is detected that the uplink Ethernet link of the ONU is interrupted and a service cannot be normally acquired from the uplink Ethernet link, if the redundant uplink PON link satisfies the preset condition (transmission condition), the service bearing channel is switched to the uplink PON link, and then when the uplink Ethernet link reaches the preset condition again, the service bearing channel is switched back to the uplink Ethernet link. Thus, normal acquisition of service of the ONU is protected.

It should be understood by those skilled in the art that functions implemented by each unit in the device for protecting service of the optical network unit shown in Fig. 12 can be understood by referring to the related description of the foregoing method for protecting service of the optical network unit. The functions of each unit in the device for protecting service of the optical network unit shown in Fig. 12 may be implemented by a program running on a processor, or may be implemented by a specific logic circuit.

In practical applications, the functions implemented by the foregoing device for protecting service of the optical network unit may be implemented by a central processing unit (CPU), a microprocessor unit (MPU), a digital signal processor (DSP), or a field programmable gate array (FPGA) located in the device for protecting service of the optical network unit.

The device for protecting service of the optical network unit in the embodiment of the present disclosure may also be stored in a computer-readable storage medium if it is implemented in the form of a software function module and sold or used as an independent product. Based on such understanding, technical solutions of embodiments of the present disclosure or portions thereof that contribute to the prior art may be embodied in the form of a software product, which may be stored in a storage medium and include several executable instructions to enable a computer device (e.g., a personal computer, a server, or a network device, etc.) to execute all or a part of the method for protecting service of the optical network unit in the embodiments of the present disclosure. The storage medium may include a USB disk, a removable hard disk, a read only memory (ROM), a magnetic disk, an optical disk, or other storage media capable of storing program codes. Thus, the embodiments of the present disclosure are not limited to any specific combination of hardware and software.

Accordingly, an embodiment of the present disclosure further provides a computer-readable storage medium storing a computer program, the computer program, when executed by a processor, cause the processor to implement the method for protecting service of the optical network unit in the embodiments of the present disclosure.

In the technical solutions of the embodiments of the present disclosure, in a case that an existing ONU is only provided with a PON port and a PON link, an Ethernet port and an Ethernet link are newly added to the ONU, and the Ethernet link and the PON link are redundant for each other, and one of the Ethernet link and the PON link is set as a service bearing link and the other is set as a standby redundant link, thereby ensuring reliability of data transmission. In the technical solutions of the embodiments of the present disclosure, when it is detected that a signal interruption occurs in the service bearing link or a quality of a signal transmitted by the service bearing link is lower than a preset quality threshold, and a link status of the redundant link satisfies a preset condition, the redundant link is used as a new service bearing link, and when the original service bearing link reaches the preset condition again, the original service bearing link is used again. Therefore, the problem that the service cannot be normally acquired when the service bearing link of the ONU has a problem is solved.

## Claims

1. A method for protecting service of an optical network unit, called an ONU, the method comprises:
providing (501) an uplink Passive Optical Network link, called an uplink PON link, and a redundant uplink Ethernet link for the ONU;
detecting (502) a quality of a signal transmitted by the uplink PON link of the ONU;
detecting (503) a link status of the redundant uplink Ethernet link in response to that the quality of the signal transmitted by the uplink PON link is determined to be lower than a preset quality threshold or in response to that the uplink PON link is detected to be interrupted;
switching (504) a service bearing channel of the uplink PON link to the redundant uplink Ethernet link in response to that the link status of the redundant uplink Ethernet link is determined to be connected; and
wherein the redundant uplink Ethernet link is connected from the ONU to a service server, the uplink PON link is connected from the ONU to an Optical Line Terminal, called OLT, and the service server and the OLT are separated from each other.

2. The method according to claim 1, further comprising:
detecting (505) a link status of the uplink PON link after switching the service bearing channel of the uplink PON link to the redundant uplink Ethernet link; and
switching (506) a service bearing channel of the redundant uplink Ethernet link to the uplink PON link in response to that the link status of the uplink PON link is determined to satisfy a preset condition.

3. The method according to claim 1, wherein the quality of the signal transmitted by the uplink PON link being lower than the preset quality threshold comprises a bit error rate of the uplink PON link being higher than a set value, or a loss-of-frame, called LOF, alarm being detected, and
detecting that the uplink PON link is interrupted comprises detecting a loss-of-signal, called LOS, alarm.

4. The method according to claim 1, wherein the uplink PON link comprises an uplink Gigabit Passive Optical Network link, called an uplink GPON link, or an uplink Ethernet Passive Optical Network link, called an uplink EPON link, and
wherein the redundant uplink Ethernet link comprises a Gigabit Ethernet link, called a GE link, or a 10 Gigabit Ethernet link, called a 10GE link.

5. A method for protecting service of an optical network unit, called an ONU, the method comprises:
providing (601) an uplink Ethernet link and a redundant uplink Passive Optical Network link, called a redundant uplink PON link, for the ONU;
detecting (602) a quality of a signal transmitted by the uplink Ethernet link of the ONU;
detecting (603) a link status of the redundant uplink PON link in response to that the quality of the signal transmitted by the uplink Ethernet link is determined to be lower than a preset quality threshold or in response to that the uplink Ethernet link is detected to be interrupted;
switching (604) a service bearing channel of the uplink Ethernet link to the redundant uplink PON link in response to that the link status of the redundant uplink PON link is determined to be connected; and
wherein the uplink Ethernet link is connected from the ONU to a service server, the redundant uplink PON link is connected from the ONU to an Optical Line Terminal, called OLT, and the service server and the OLT are separated from each other.

6. The method according to claim 5, further comprising:
detecting (605) a link status of the uplink Ethernet link after switching the service bearing channel of the uplink Ethernet link to the redundant uplink PON link; and
switching (606) a service bearing channel of the redundant uplink PON link to the uplink Ethernet link in response to that the link status of the uplink Ethernet link is determined to satisfy a preset condition.

7. The method according to claim 5, wherein the quality of the signal transmitted by the uplink Ethernet link being lower than the preset quality threshold comprises a bit error rate of the uplink Ethernet link being higher than a set value, or a loss-of-frame, called LOF, alarm being detected, and
detecting that the uplink Ethernet link is interrupted comprises detecting a loss-of-signal, called LOS, alarm.

8. The method according to claim 5, wherein the redundant uplink PON link comprises an uplink Gigabit Passive Optical Network link, called an uplink GPON link, or an uplink Ethernet Passive Optical Network link, called an uplink EPON link, and
wherein the uplink Ethernet link comprises a Gigabit Ethernet link, called a GE link, or a 10 Gigabit Ethernet link, called a 10GE link.

9. A device for protecting service of an optical network unit, called an ONU, the device comprises:
a configuration unit (98, 108) configured to provide the ONU with an uplink Passive Optical Network link, called an uplink PON link, and a redundant uplink Ethernet link;
a first detection unit (90, 100) configured to detect a quality of a signal transmitted by the uplink PON link of the ONU;
a first determination unit (91, 101) configured to trigger a second detection unit in response to the quality of the signal transmitted by the uplink PON link is determined to be lower than a preset quality threshold, or trigger the second detection unit in response to that the uplink PON link is detected to be interrupted;
the second detection unit (92, 102) configured to detect a link status of the redundant uplink Ethernet link;
a second determination unit (93, 103) configured to determine whether the link status of the redundant uplink Ethernet link is connected, and trigger a first switching unit in response to that the link status of the redundant uplink Ethernet link is determined to be connected; and
the first switching unit (94, 104) configured to switch a service bearing channel of the uplink PON link to the redundant uplink Ethernet link; and
wherein the device is configured to setup the redundant uplink Ethernet link connection from the ONU to a service server and to setup the uplink PON link connection from the ONU to an Optical Line Terminal, called OLT, wherein the service server and the OLT are separate from each other.

10. The device according to claim 9, further comprising a third detection unit (95, 105), a third determination unit (96, 106), and a second switching unit (97, 107), wherein
the third detection unit (95, 105) is configured to detect a link status of the uplink PON link after switching the service bearing channel of the uplink PON link to the redundant uplink Ethernet link;
the third determination unit (96, 106) is configured to determine whether a link status of the uplink PON link satisfies a preset condition, and trigger the second switching unit in response to that the link status of the uplink PON link satisfies the preset condition; and
the second switching unit (97, 107) is configured to switch a service bearing channel of the redundant uplink Ethernet link to the uplink PON link.

11. The device according to claim 9, wherein the uplink PON link comprises an uplink Gigabit Passive Optical Network link, called an uplink GPON link, or an uplink Ethernet Passive Optical Network link, called an uplink EPON link, and
wherein the redundant uplink Ethernet link comprises a Gigabit Ethernet link, called a GE link, or a 10 Gigabit Ethernet link, called a 10GE link.

12. A device for protecting service of an optical network unit, called an ONU, the device comprises:
a configuration unit (118, 128) configured to provide the ONU with an uplink Ethernet link and a redundant uplink Passive Optical Network link, called a redundant uplink PON link;
a first detection unit (110, 120) configured to detect a quality of a signal transmitted by the uplink Ethernet link of the ONU;
a first determination unit (111, 121) configured to trigger a second detection unit in response to that the quality of the signal transmitted by the uplink Ethernet link is determined to be lower than a preset quality threshold, or trigger the second detection unit in response to that the uplink Ethernet link is detected to be interrupted;
the second detection unit (112, 122) configured to detect a link status of the redundant uplink PON link;
a second determination unit (113, 123) configured to determine whether the link status of the redundant uplink PON link is connected, and trigger a first switching unit in response to that the link status of the redundant uplink PON link is determined to be connected; and
the first switching unit (114, 124) configured to switch a service bearing channel of the uplink Ethernet link to the redundant uplink PON link; and
wherein the device is configured to setup the uplink Ethernet link connection from the ONU to a service server and to setup the redundant uplink PON link connection from the ONU to an Optical Line Terminal, called OLT, wherein the service server and the OLT are separate from each other.

13. The device according to claim 12, further comprising a third detection unit (115, 125), a third determination unit (116, 126), and a second switching unit (117, 127), wherein
the third detection unit (115, 125) is configured to detect a link status of the uplink Ethernet link after switching the service bearing channel of the uplink Ethernet link to the redundant uplink PON link;
the third determination unit (116, 126) is configured to determine whether the link status of the uplink Ethernet link satisfies a preset condition, and trigger the second switching unit in response to that the link status of the uplink Ethernet link satisfies the preset condition; and
the second switching unit (117, 127) is configured to switch a service bearing channel of the redundant uplink PON link to the uplink Ethernet link.

14. The device according to claim 12, wherein the redundant uplink PON link comprises an uplink Gigabit Passive Optical Network link, called an uplink GPON link, or an uplink Ethernet Passive Optical Network link, called an uplink EPON link, and
wherein the uplink Ethernet link comprises a Gigabit Ethernet link, called a GE link, or a 10 Gigabit Ethernet link, called a 10GE link.

15. A computer-readable storage medium storing a computer program comprising instructions to cause the device of any of claims 9 to 11 to execute the steps of the method for protecting service of an optical network unit according to any one of claims 1 to 4, or
the computer program comprising instructions to cause the device of any of claims 12 to 14 to execute the steps of the method for protecting service of an optical network unit according to any one of claims 5 to 8.

## Patentansprüche

1. Verfahren zum Schützen des Service einer optischen Netzwerkeinheit, die als ONU bezeichnet wird, wobei das Verfahren Folgendes umfasst:
Bereitstellen (501) einer passiven optischen Uplink-Netzwerkverbindung, die als Uplink-PON-Verbindung bezeichnet wird, und einer redundanten Uplink-Ethernet-Verbindung für die ONU;
Detektieren (502) einer Qualität eines Signals, das durch die Uplink-PON-Verbindung der ONU übertragen wird;
Detektieren (503) eines Verbindungsstatus der redundanten Uplink-Ethernet-Verbindung als Reaktion darauf, dass bestimmt wird, dass die Qualität des Signals, das durch die Uplink-PON-Verbindung übertragen wird, niedriger als ein voreingestellter Qualitätsschwellenwert ist, oder als Reaktion darauf, dass detektiert wird, dass die Uplink-PON-Verbindung unterbrochen ist;
Schalten (504) eines Service-Träger-Kanals der Uplink-PON-Verbindung zu der redundanten Uplink-Ethernet-Verbindung als Reaktion darauf, dass bestimmt wird, dass der Verbindungsstatus der redundanten Uplink-Ethernet-Verbindung verbunden ist; und
wobei die redundante Uplink-Ethernet-Verbindung von der ONU mit einem Service-Server verbunden ist, die Uplink-PON-Verbindung von der ONU mit einem optischen Leitungsendgerät, das als OLT bezeichnet wird, verbunden ist und der Service-Server und das OLT voneinander getrennt sind.

2. Verfahren nach Anspruch 1, das ferner Folgendes umfasst:
Detektieren (505) eines Verbindungsstatus der Uplink-PON-Verbindung nach dem Schalten des Service-Träger-Kanals der Uplink-PON-Verbindung zu der redundanten Uplink-Ethernet-Verbindung; und
Schalten (506) eines Service-Träger-Kanals der redundanten Uplink-Ethernet-Verbindung zu der Uplink-PON-Verbindung als Reaktion darauf, dass bestimmt wird, dass der Verbindungsstatus der Uplink-PON-Verbindung eine voreingestellte Bedingung erfüllt.

3. Verfahren nach Anspruch 1, wobei die Qualität des Signals, das durch die Uplink-PON-Verbindung übertragen wird, die niedriger als der voreingestellte Qualitätsschwellenwert ist, umfasst, dass eine Bitfehlerrate der Uplink-PON-Verbindung höher als ein eingestellter Wert ist oder ein Rahmenverlustalarm, der als LOF bezeichnet wird, detektiert wird, und
das Detektieren, dass die Uplink-PON-Verbindung unterbrochen ist, das Detektieren eines Signalverlustalarms, der als LOS-Alarm bezeichnet wird, umfasst.

4. Verfahren nach Anspruch 1, wobei die Uplink-PON-Verbindung eine passive optische Uplink-Gigabit-Netzwerkverbindung, die als Uplink-GPON-Verbindung bezeichnet wird, oder eine passive optische Uplink-Ethernet-Netzwerkverbindung, die als Uplink-EPON-Verbindung bezeichnet wird, umfasst, und
wobei die redundante Uplink-Ethernet-Verbindung eine Gigabit-Ethernet-Verbindung, die als GE-Verbindung bezeichnet wird, oder eine 10-Gigabit-Ethernet-Verbindung, die als 10GE-Verbindung bezeichnet wird, umfasst.

5. Verfahren zum Schützen des Service einer optischen Netzwerkeinheit, die als ONU bezeichnet wird, wobei das Verfahren Folgendes umfasst:
Bereitstellen (601) einer Uplink-Ethernet-Verbindung und einer passiven optischen Uplink-Netzwerkverbindung, die als redundante Uplink-PON-Verbindung bezeichnet wird, für die ONU;
Detektieren (602) einer Qualität eines Signals, das durch die Uplink-Ethernet-Verbindung der ONU übertragen wird;
Detektieren (603) eines Verbindungsstatus der redundanten Uplink-PON-Verbindung als Reaktion darauf, dass bestimmt wird, dass die Qualität des Signals, das durch die Uplink-Ethernet-Verbindung übertragen wird, niedriger als ein voreingestellter Qualitätsschwellenwert ist, oder als Reaktion darauf, dass detektiert wird, dass die Uplink-Ethernet-Verbindung unterbrochen ist;
Schalten (604) eines Service-Träger-Kanals der Uplink-Ethernet-Verbindung zu der redundanten Uplink-PON-Verbindung als Reaktion darauf, dass bestimmt wird, dass der Verbindungsstatus der redundanten Uplink-PON-Verbindung verbunden ist; und
wobei die Uplink-Ethernet-Verbindung von der ONU mit einem Service-Server verbunden ist, die redundante Uplink-PON-Verbindung von der ONU mit einem optischen Leitungsendgerät, das als OLT bezeichnet wird, verbunden ist und der Service-Server und das OLT voneinander getrennt sind.

6. Verfahren nach Anspruch 5, das ferner Folgendes umfasst:
Detektieren (605) eines Verbindungsstatus der Uplink-Ethernet-Verbindung nach dem Schalten des Service-Träger-Kanals der Uplink-Ethernet-Verbindung zu der redundanten Uplink-PON-Verbindung; und
Schalten (606) eines Service-Träger-Kanals der redundanten Uplink-PON-Verbindung zu der Uplink-Ethernet-Verbindung als Reaktion darauf, dass bestimmt wird, dass der Verbindungsstatus der Uplink-Ethernet-Verbindung eine voreingestellte Bedingung erfüllt.

7. Verfahren nach Anspruch 5, wobei die Qualität des Signals, das durch die Uplink-Ethernet-Verbindung übertragen wird, die niedriger als der voreingestellte Qualitätsschwellenwert ist, umfasst, dass eine Bitfehlerrate der Uplink-Ethernet-Verbindung höher als ein eingestellter Wert ist oder ein Rahmenverlustalarm, der als LOF-Alarm bezeichnet wird, detektiert wird, und
das Detektieren, dass die Uplink-Ethernet-Verbindung unterbrochen ist, das Detektieren eines Signalverlustalarms, der als LOS-Alarm bezeichnet wird, umfasst.

8. Verfahren nach Anspruch 5, wobei die redundante Uplink-PON-Verbindung eine passive optische Uplink-Gigabit-Netzwerkverbindung, die als Uplink-GPON-Verbindung bezeichnet wird, oder eine passive optische Uplink-Ethernet-Netzwerkverbindung, die als Uplink-EPON-Verbindung bezeichnet wird, umfasst, und
wobei die Uplink-Ethernet-Verbindung eine Gigabit-Ethernet-Verbindung, die als GE-Verbindung bezeichnet wird, oder eine 10-Gigabit-Ethernet-Verbindung, die als 10GE-Verbindung bezeichnet wird, umfasst.

9. Vorrichtung zum Schützen des Service einer optischen Netzwerkeinheit, die als ONU bezeichnet wird, wobei die Vorrichtung Folgendes umfasst:
eine Konfigurationseinheit (98, 108), die konfiguriert ist, um der ONU eine passive optische Uplink-Netzwerkverbindung, die als Uplink-PON-Verbindung bezeichnet wird, und eine redundante Uplink-Ethernet-Verbindung bereitzustellen;
eine erste Detektionseinheit (90, 100), die konfiguriert ist, um eine Qualität eines Signals, das durch die Uplink-PON-Verbindung der ONU übertragen wird, zu detektieren;
eine erste Bestimmungseinheit (91, 101), die konfiguriert ist, um als Reaktion darauf, dass bestimmt wird, dass die Qualität des Signals, das durch die Uplink-PON-Verbindung übertragen wird, niedriger als ein voreingestellter Qualitätsschwellenwert ist, eine zweite Detektionseinheit auszulösen oder als Reaktion darauf, dass detektiert wird, dass die Uplink-PON-Verbindung unterbrochen ist, die zweite Detektionseinheit auszulösen;
wobei die zweite Detektionseinheit (92, 102) konfiguriert ist, um einen Verbindungsstatus der redundanten Uplink-Ethernet-Verbindung zu detektieren;
eine zweite Bestimmungseinheit (93, 103), die konfiguriert ist, um zu bestimmen, ob der Verbindungsstatus der redundanten Uplink-Ethernet-Verbindung verbunden ist, und als Reaktion darauf, dass bestimmt wird, dass der Verbindungsstatus der redundanten Uplink-Ethernet-Verbindung verbunden ist, eine erste Schalteinheit auszulösen; und
die erste Schalteinheit (94, 104), die konfiguriert ist, um einen Service-Träger-Kanal der Uplink-PON-Verbindung zu der redundanten Uplink-Ethernet-Verbindung zu schalten; und
wobei die Vorrichtung konfiguriert ist, um die redundante Uplink-Ethernet-Verbindungsverbindung von der ONU zu einem Service-Server aufzubauen und die Uplink-PON-Verbindungsverbindung von der ONU zu einem optischen Leitungsendgerät, das als OLT bezeichnet wird, aufzubauen, wobei der Service-Server und das OLT voneinander getrennt sind.

10. Vorrichtung nach Anspruch 9, die ferner eine dritte Detektionseinheit (95, 105), eine dritte Bestimmungseinheit (96, 106) und eine zweite Schalteinheit (97, 107) umfasst, wobei
die dritte Detektionseinheit (95, 105) konfiguriert ist, um einen Verbindungsstatus der Uplink-PON-Verbindung nach dem Schalten des Service-Träger-Kanals der Uplink-PON-Verbindung zu der redundanten Uplink-Ethernet-Verbindung zu detektieren;
die dritte Bestimmungseinheit (96, 106) konfiguriert ist, um zu bestimmen, ob ein Verbindungsstatus der Uplink-PON-Verbindung eine voreingestellte Bedingung erfüllt, und als Reaktion darauf, dass der Verbindungsstatus der Uplink-PON-Verbindung die voreingestellte Bedingung erfüllt, die zweite Schalteinheit auszulösen; und
die zweite Schalteinheit (97, 107) konfiguriert ist, um einen Service-Träger-Kanal der redundanten Uplink-Ethernet-Verbindung zu der Uplink-PON-Verbindung zu schalten.

11. Vorrichtung nach Anspruch 9, wobei die Uplink-PON-Verbindung eine passive optische Uplink-Gigabit-Netzwerkverbindung, die als Uplink-GPON-Verbindung bezeichnet wird, oder eine passive optische Uplink-Ethernet-Netzwerkverbindung, die als Uplink-EPON-Verbindung bezeichnet wird, umfasst, und
wobei die redundante Uplink-Ethernet-Verbindung eine Gigabit-Ethernet-Verbindung, die als GE-Verbindung bezeichnet wird, oder eine 10-Gigabit-Ethernet-Verbindung, die als 10GE-Verbindung bezeichnet wird, umfasst.

12. Vorrichtung zum Schützen des Service einer optischen Netzwerkeinheit, die als ONU bezeichnet wird, wobei die Vorrichtung Folgendes umfasst:
eine Konfigurationseinheit (118, 128), die konfiguriert ist, um der ONU eine Uplink-Ethernet-Verbindung und eine passive optische Uplink-Netzwerkverbindung, die als redundante Uplink-PON-Verbindung bezeichnet wird, bereitzustellen;
eine erste Detektionseinheit (110, 120), die konfiguriert ist, um eine Qualität eines Signals, das durch die Uplink-Ethernet-Verbindung der ONU übertragen wird, zu detektieren;
eine erste Bestimmungseinheit (111, 121), die konfiguriert ist, um als Reaktion darauf, dass bestimmt wird, dass die Qualität des Signals, das durch die Uplink-Ethernet-Verbindung übertragen wird, niedriger als ein voreingestellter Qualitätsschwellenwert ist, eine zweite Detektionseinheit auszulösen oder als Reaktion darauf, dass detektiert wird, dass die Uplink-Ethernet-Verbindung unterbrochen ist, die zweite Detektionseinheit auszulösen;
wobei die zweite Detektionseinheit (112, 122) konfiguriert ist, um einen Verbindungsstatus der redundanten Uplink-PON-Verbindung zu detektieren;
eine zweite Bestimmungseinheit (113, 123), die konfiguriert ist, um zu bestimmen, ob der Verbindungsstatus der redundanten Uplink-PON-Verbindung verbunden ist, und als Reaktion darauf, dass bestimmt wird, dass der Verbindungsstatus der redundanten Uplink-PON-Verbindung verbunden ist, eine erste Schalteinheit auszulösen; und
die erste Schalteinheit (114, 124), die konfiguriert ist, um einen Service-Träger-Kanal der Uplink-Ethernet-Verbindung zu der redundanten Uplink-PON-Verbindung zu schalten; und
wobei die Vorrichtung konfiguriert ist, um die Uplink-Ethernet-Verbindungsverbindung von der ONU zu einem Service-Server aufzubauen und die redundante Uplink-PON-Verbindungsverbindung von der ONU zu einem optischen Leitungsendgerät, das als OLT bezeichnet wird, aufzubauen, wobei der Service-Server und das OLT voneinander getrennt sind.

13. Vorrichtung nach Anspruch 12, die ferner eine dritte Detektionseinheit (115, 125), eine dritte Bestimmungseinheit (116, 126) und eine zweite Schalteinheit (117, 127) umfasst, wobei
die dritte Detektionseinheit (115, 125) konfiguriert ist, um einen Verbindungsstatus der Uplink-Ethernet-Verbindung nach dem Schalten des Service-Träger-Kanals der Uplink-Ethernet-Verbindung zu der redundanten Uplink-PON-Verbindung zu detektieren;
die dritte Bestimmungseinheit (116, 126) konfiguriert ist, um zu bestimmen, ob der Verbindungsstatus der Uplink-Ethernet-Verbindung eine voreingestellte Bedingung erfüllt, und als Reaktion darauf, dass der Verbindungsstatus der Uplink-Ethernet-Verbindung die voreingestellte Bedingung erfüllt, die zweite Schalteinheit auszulösen; und
die zweite Schalteinheit (117, 127) konfiguriert ist, um einen Service-Träger-Kanal der redundanten Uplink-PON-Verbindung zu der Uplink-Ethernet-Verbindung zu schalten.

14. Vorrichtung nach Anspruch 12, wobei die redundante Uplink-PON-Verbindung eine passive optische Uplink-Gigabit-Netzwerkverbindung, die als Uplink-GPON-Verbindung bezeichnet wird, oder eine passive optische Uplink-Ethernet-Netzwerkverbindung, die als Uplink-EPON-Verbindung bezeichnet wird, umfasst, und
wobei die Uplink-Ethernet-Verbindung eine Gigabit-Ethernet-Verbindung, die als GE-Verbindung bezeichnet wird, oder eine 10-Gigabit-Ethernet-Verbindung, die als 10GE-Verbindung bezeichnet wird, umfasst.

15. Computerlesbares Speichermedium zum Speichern eines Computerprogramms, das Anweisungen umfasst, um die Vorrichtung nach einem der Ansprüche 9 bis 11 zu veranlassen, die Schritte des Verfahrens zum Schützen des Service einer optischen Netzwerkeinheit nach einem der Ansprüche 1 bis 4 auszuführen, oder
wobei das Computerprogramm Anweisungen umfasst, um die Vorrichtung nach einem der Ansprüche 12 bis 14 zu veranlassen, die Schritte des Verfahrens zum Schützen des Service einer optischen Netzwerkeinheit nach einem der Ansprüche 5 bis 8 auszuführen.

## Revendications

1. Procédé pour protéger un service d'une unité de réseau optique, appelée ONU, le procédé comprenant les étapes consistant à :
fournir (501) une liaison de réseau optique passif de liaison montante, appelée liaison PON de liaison montante, et une liaison Ethernet de liaison montante redondante pour l'ONU ;
détecter (502) une qualité d'un signal envoyé par la liaison PON de liaison montante de l'ONU ;
détecter (503) un état de liaison de la liaison Ethernet de liaison montante redondante en réponse à la détermination que la qualité du signal envoyé par la liaison PON de liaison montante est inférieure à un seuil de qualité prédéfini ou en réponse à la détection que la liaison PON de liaison montante est interrompue ;
commuter (504) un canal porteur de service de la liaison PON de liaison montante vers la liaison Ethernet de liaison montante redondante en réponse à la détermination que l'état de liaison de la liaison Ethernet de liaison montante redondante est connecté ; et
dans lequel la liaison Ethernet de liaison montante redondante est connectée de l'ONU à un serveur de service, la liaison PON de liaison montante est connectée de l'ONU à un terminal de ligne optique, appelé OLT, et le serveur de service et l'OLT sont séparés l'un de l'autre.

2. Procédé selon la revendication 1, comprenant en outre les étapes consistant à :
détecter (505) un état de liaison de la liaison PON de liaison montante après avoir commuté le canal porteur de service de la liaison PON de liaison montante vers la liaison Ethernet de liaison montante redondante ; et
commuter (506) un canal porteur de service de la liaison Ethernet de liaison montante redondante vers la liaison PON de liaison montante en réponse à la détermination que l'état de liaison de la liaison PON de liaison montante satisfait à une condition prédéfinie.

3. Procédé selon la revendication 1, dans lequel la qualité du signal envoyé par la liaison PON de liaison montante qui est inférieure au seuil de qualité prédéfini comprend un taux d'erreur binaire de la liaison PON de liaison montante qui est supérieur à une valeur définie, ou une alarme de perte de trame, appelée alarme de LOF, qui est détectée, et
détecter que la liaison PON de liaison montante est interrompue comprend détecter une alarme de perte de signal, appelée alarme de LOS.

4. Procédé selon la revendication 1, dans lequel la liaison PON de liaison montante comprend une liaison de réseau optique passif Gigabit de liaison montante, appelée liaison GPON de liaison montante, ou une liaison de réseau optique passif Ethernet de liaison montante, appelée liaison EPON de liaison montante, et
dans lequel la liaison Ethernet de liaison montante redondante comprend une liaison Ethernet Gigabit, appelée liaison GE, ou une liaison Ethernet 10 Gigabit, appelée liaison 10GE.

5. Procédé pour protéger un service d'une unité de réseau optique, appelée ONU, le procédé comprenant les étapes consistant à :
fournir (601) une liaison Ethernet de liaison montante et une liaison de réseau optique passif de liaison montante redondante, appelée liaison PON de liaison montante redondante, pour l'ONU ;
détecter (602) une qualité d'un signal envoyé par la liaison Ethernet de liaison montante de l'ONU ;
détecter (603) un état de liaison de la liaison PON de liaison montante redondante en réponse à la détermination que la qualité du signal envoyé par la liaison Ethernet de liaison montante est inférieure à un seuil de qualité prédéfini ou en réponse à la détection que la liaison Ethernet de liaison montante est interrompue ;
commuter (604) un canal porteur de service de la liaison Ethernet de liaison montante vers la liaison PON de liaison montante redondante en réponse à la détermination que l'état de liaison de la liaison PON de liaison montante redondante est connecté ; et
dans lequel la liaison Ethernet de liaison montante est connectée de l'ONU à un serveur de service, la liaison PON de liaison montante redondante est connectée de l'ONU à un terminal de ligne optique, appelé OLT, et le serveur de service et l'OLT sont séparés l'un de l'autre.

6. Procédé selon la revendication 5, comprenant en outre les étapes consistant à :
détecter (605) un état de liaison de la liaison Ethernet de liaison montante après avoir commuté le canal porteur de service de la liaison Ethernet de liaison montante vers la liaison PON de liaison montante redondante ; et
commuter (606) un canal porteur de service de la liaison PON de liaison montante redondante vers la liaison Ethernet de liaison montante en réponse à la détermination que l'état de liaison de la liaison Ethernet de liaison montante satisfait à une condition prédéfinie.

7. Procédé selon la revendication 5, dans lequel la qualité du signal envoyé par la liaison Ethernet de liaison montante qui est inférieure au seuil de qualité prédéfini comprend un taux d'erreur binaire de la liaison Ethernet de liaison montante qui est supérieur à une valeur définie, ou une alarme de perte de trame, appelée alarme de LOF, qui est détectée, et
détecter que la liaison Ethernet de liaison montante est interrompue comprend détecter une alarme de perte de signal, appelée alarme de LOS.

8. Procédé selon la revendication 5, dans lequel la liaison PON de liaison montante redondante comprend une liaison de réseau optique passif Gigabit de liaison montante, appelée liaison GPON de liaison montante, ou une liaison de réseau optique passif Ethernet de liaison montante, appelée liaison EPON de liaison montante, et
dans lequel la liaison Ethernet de liaison montante comprend une liaison Ethernet Gigabit, appelée liaison GE, ou une liaison Ethernet 10 Gigabit, appelée liaison 10GE.

9. Dispositif pour protéger un service d'une unité de réseau optique, appelée ONU, le dispositif comprenant :
une unité de configuration (98, 108) configurée pour fournir à l'ONU une liaison de réseau optique passif de liaison montante, appelée liaison PON de liaison montante, et une liaison Ethernet de liaison montante redondante ;
une première unité de détection (90, 100) configurée pour détecter une qualité d'un signal envoyé par la liaison PON de liaison montante de l'ONU ;
une première unité de détermination (91, 101) configurée pour déclencher une seconde unité de détection en réponse à la détermination que la qualité du signal envoyé par la liaison PON de liaison montante est inférieure à un seuil de qualité prédéfini, ou déclencher la seconde unité de détection en réponse à la détection que la liaison PON de liaison montante est interrompue ;
la seconde unité de détection (92, 102) configurée pour détecter un état de liaison de la liaison Ethernet de liaison montante redondante ;
une seconde unité de détermination (93, 103) configurée pour déterminer si l'état de liaison de la liaison Ethernet de liaison montante redondante est connecté, et déclencher une première unité de commutation en réponse à la détermination que l'état de liaison de la liaison Ethernet de liaison montante redondante est connecté ; et
la première unité de commutation (94, 104) configurée pour commuter un canal porteur de service de la liaison PON de liaison montante vers la liaison Ethernet de liaison montante redondante ; et
dans lequel le dispositif est configuré pour établir la connexion de liaison Ethernet de liaison montante redondante de l'ONU à un serveur de service et pour établir la connexion de liaison PON de liaison montante de l'ONU à un terminal de ligne optique, appelé OLT, dans lequel le serveur de service et l'OLT sont séparés l'un de l'autre.

10. Dispositif selon la revendication 9, comprenant en outre une troisième unité de détection (95, 105), une troisième unité de détermination (96, 106) et une seconde unité de commutation (97, 107), dans lequel
la troisième unité de détection (95, 105) est configurée pour détecter un état de liaison de la liaison PON de liaison montante après avoir commuté le canal porteur de service de la liaison PON de liaison montante vers la liaison Ethernet de liaison montante redondante ;
la troisième unité de détermination (96, 106) est configurée pour déterminer si un état de liaison de la liaison PON de liaison montante satisfait à une condition prédéfinie, et déclencher la seconde unité de commutation en réponse à la détermination que l'état de liaison de la liaison PON de liaison montante satisfait à la condition prédéfinie ; et
la seconde unité de commutation (97, 107) est configurée pour commuter un canal porteur de service de la liaison Ethernet de liaison montante redondante vers la liaison PON de liaison montante.

11. Dispositif selon la revendication 9, dans lequel la liaison PON de liaison montante comprend une liaison de réseau optique passif Gigabit de liaison montante, appelée liaison GPON de liaison montante, ou une liaison de réseau optique passif Ethernet de liaison montante, appelée liaison EPON de liaison montante, et
dans lequel la liaison Ethernet de liaison montante redondante comprend une liaison Ethernet Gigabit, appelée liaison GE, ou une liaison Ethernet 10 Gigabit, appelée liaison 10GE.

12. Dispositif pour protéger un service d'une unité de réseau optique, appelée ONU, le dispositif comprenant :
une unité de configuration (118, 128) configurée pour fournir à l'ONU une liaison Ethernet de liaison montante et une liaison de réseau optique passif de liaison montante redondante, appelée liaison PON de liaison montante redondante ;
une première unité de détection (110, 120) configurée pour détecter une qualité d'un signal envoyé par la liaison Ethernet de liaison montante de l'ONU ;
une première unité de détermination (111, 121) configurée pour déclencher une seconde unité de détection en réponse à la détermination que la qualité du signal envoyé par la liaison Ethernet de liaison montante est inférieure à un seuil de qualité prédéfini, ou déclencher la seconde unité de détection en réponse à la détection que la liaison Ethernet de liaison montante est interrompue ;
la seconde unité de détection (112, 122) configurée pour détecter un état de liaison de la liaison PON de liaison montante redondante ;
une seconde unité de détermination (113, 123) configurée pour déterminer si l'état de liaison de la liaison PON de liaison montante redondante est connecté, et déclencher une première unité de commutation en réponse à la détermination que l'état de liaison de la liaison PON de liaison montante redondante est connecté ; et
la première unité de commutation (114, 124) configurée pour commuter un canal porteur de service de la liaison Ethernet de liaison montante vers la liaison PON de liaison montante redondante ; et
dans lequel le dispositif est configuré pour établir la connexion de liaison Ethernet de liaison montante de l'ONU à un serveur de service et pour établir la connexion de liaison PON de liaison montante redondante de l'ONU à un terminal de ligne optique, appelé OLT, dans lequel le serveur de service et l'OLT sont séparés l'un de l'autre.

13. Dispositif selon la revendication 12, comprenant en outre une troisième unité de détection (115, 125), une troisième unité de détermination (116, 126) et une seconde unité de commutation (117, 127), dans lequel
la troisième unité de détection (115, 125) est configurée pour détecter un état de liaison de la liaison Ethernet de liaison montante après avoir commuté le canal porteur de service de la liaison Ethernet de liaison montante vers la liaison PON de liaison montante redondante;
la troisième unité de détermination (116, 126) est configurée pour déterminer si l'état de liaison de la liaison Ethernet de liaison montante satisfait à une condition prédéfinie, et déclencher la seconde unité de commutation en réponse à la détermination que l'état de liaison de la liaison Ethernet de liaison montante satisfait à la condition prédéfinie ; et
la seconde unité de commutation (117, 127) est configurée pour commuter un canal porteur de service de la liaison PON de liaison montante redondante vers la liaison Ethernet de liaison montante.

14. Dispositif selon la revendication 12, dans lequel la liaison PON de liaison montante redondante comprend une liaison de réseau optique passif Gigabit de liaison montante, appelée liaison GPON de liaison montante, ou une liaison de réseau optique passif Ethernet de liaison montante, appelée liaison EPON de liaison montante, et
dans lequel la liaison Ethernet de liaison montante comprend une liaison Ethernet Gigabit, appelée liaison GE, ou une liaison Ethernet 10 Gigabit, appelée liaison 10GE.

15. Moyen de stockage lisible par ordinateur stockant un programme informatique comprenant des instructions pour amener le dispositif selon l'une quelconque des revendications 9 à 11 à exécuter les étapes du procédé pour protéger un service d'une unité de réseau optique selon l'une quelconque des revendications 1 à 4, ou
le programme informatique comprenant des instructions pour amener le dispositif selon l'une quelconque des revendications 12 à 14 à exécuter les étapes du procédé pour protéger un service d'une unité de réseau optique selon l'une quelconque des revendications 5 à 8.
